# FASCICULE DE BREVET EUROPEEN

(11) **EP 0 811 344 B1**
(45) Date de publication et mention de la délivrance du brevet: **14.04.1999**
(21) Numéro de dépôt: 97401258.5
(22) Date de dépôt: 04.06.1997
(51) Int. Cl.: A47J 31/44, A47J 31/40

(54) **Cafetière goutte-à-goutte comportant un dispositif de dosage de la mouture de café**
Kaffeemaschine vom "tröpfchenweise" Typ mit einer Dosiervorrichtung für das Kaffeemehl
Drip type coffee machine with a dosing device for coffee powder

(30) Priorité: 05.06.1996 FR 9606908
(43) Date de publication de la demande: 10.12.1997
(73) Titulaire: MOULINEX S.A., 75008 Paris (FR)
(72) Inventeur: Nielsen, Henrik, 14610 Cambes en Plaine (FR)
(74) Mandataire: Busquets, Jean-Pierre

(56) Documents cités:
- DE-U- 9 111 989
- NL-A- 7 906 356
- US-A- 5 536 393

## Description

La présente invention se rapporte aux cafetières ménagères goutte-à-goutte comprenant, dans un boîtier, un porte-filtre dans lequel est versée de la mouture de café, et un dispositif de dosage de la mouture de café versée dans le porte-filtre (voir par exemple NL-A-7906356).

On sait qu'avec les cafetières goutte-à-goutte, le dosage de la quantité de mouture de café à filtrer constitue une opération importante dans la préparation d'un bon café car elle influe beaucoup sur la force et la qualité aromatique de l'infusion de café. De fait, l'opération de dosage de la mouture de café doit être effectuée avec précision pour obtenir un bon arôme de l'infusion de café, ce qui est relativement difficile à faire en utilisant seulement une petite cuiller de mesure.

On a alors proposé d'équiper les cafetières goutte-à-goutte d'un dispositif permettant de définir la quantité exacte de mouture de café à filtrer. Un dispositif connu de dosage de la mouture de café versée dans le porte-filtre d'une cafetière goutte-à-goutte comporte un mécanisme à levier lié au porte-filtre et déplaçable sous l'action d'un flotteur monté mobile dans le réservoir d'eau de la cafetière et réagissant sur le niveau de l'eau contenue dans le réservoir jusqu'à atteindre une position définie en laquelle le rapport entre la quantité d'eau et la quantité de mouture versée dans le porte-filtre est constant. Toutefois, ce dispositif de dosage de la quantité de mouture de café, lié en fait à la quantité d'eau contenue dans le réservoir d'eau, est d'une structure relativement complexe, onéreuse et nécessitant un dimensionnement très précis du mécanisme à levier pour obtenir le rapport constant eau/mouture, ce qui est difficile à maîtriser dans une fabrication en grande série de cafetières.

L'invention a notamment pour but de remédier à ces inconvénients et de réaliser une cafetière goutte-à-goutte équipée d'un dispositif de dosage de la mouture de café à filtrer qui soit simple, économique, indépendant de la quantité d'eau et d'une grande fiabilité.

Dans une cafetière goutte-à-goutte selon l'invention, le porte-filtre étant monté mobile dans le boîtier, le dispositif de dosage comporte au moins un organe mécanique déformable couplé au porte-filtre, réagissant par déformation à la quantité de mouture de café versée dans le porte-filtre, et propre à entraîner, par suite de sa déformation, un organe d'indication visuelle de la quantité de mouture de café désirée, ledit organe déformable étant en position stable lorsque la quantité de mouture de café désirée est obtenue.

Grâce à cet organe déformable réagissant à la quantité de mouture de café versée dans le porte-filtre mobile et restant stable dès l'opération de dosage terminée, on obtient ainsi d'une manière simple un dosage très précis de la quantité de mouture de café désirée par le consommateur, visible de l'extérieur de la cafetière, et partant, un bon arôme de l'infusion de café une fois confectionnée.

Selon un mode de réalisation préféré, l'organe déformable est formé de quatre bras articulés constituant un parallélogramme déformable, l'un des bras d'une des deux paires du parallélogramme étant mécaniquement relié au porte-filtre et étant associé à un organe élastique monté dans le boîtier de manière à maintenir en un équilibre stable ledit parallélogramme lorsque la quantité de mouture de café désirée est obtenue, et l'un des bras de l'autre paire du parallélogramme étant lié à l'organe d'indication visuelle.

Les caractéristiques et avantages de l'invention ressortiront d'ailleurs de la description qui va suivre, à titre d'exemple non limitatif, en référence aux dessins annexés dans lesquels :
- la figure 1 est une vue schématique, partiellement en élévation et partiellement en coupe, d'une cafetière goutte-à-goutte comportant un dispositif de dosage de la mouture de café selon l'invention ;
- la figure 2 est une vue à plus grande échelle du dispositif de dosage associé au porte-filtre de la cafetière de la figure 1 ; et
- la figure 3 est une vue en plan à échelle agrandie d'un cadran gradué en nombre de tasses à café, pour différentes forces définies de café, et agencé en façade de la cafetière de la figure 1.

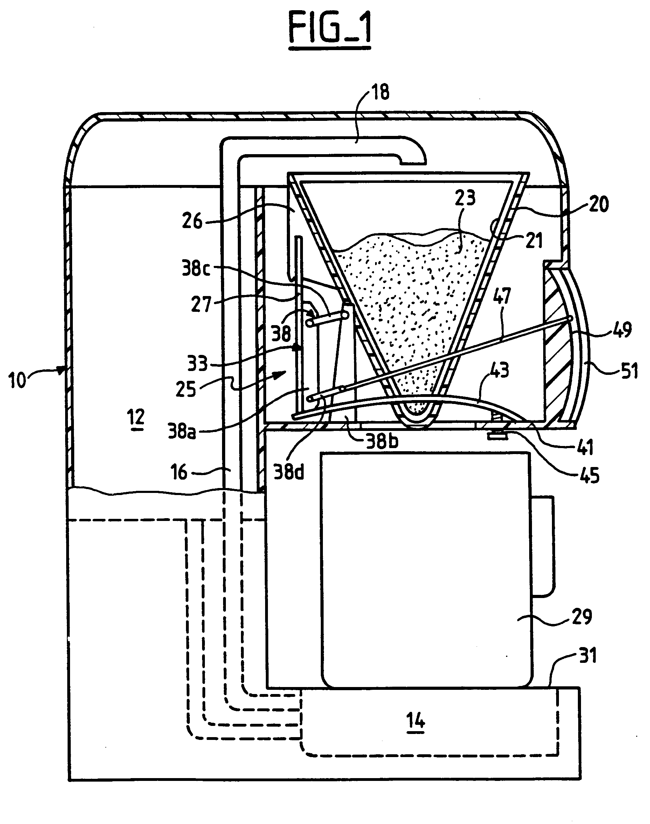

La cafetière ménagère goutte-à-goutte représentée à la figure 1 comprend, dans un boîtier 10, un réservoir d'eau froide 12, un chauffe-eau 14 alimenté par ce réservoir et alimentant lui-même, par un tube d'eau chaude ascendant 16, une goulotte d'arrosage 18 agencée au-dessus d'un porte-filtre 20 monté mobile dans le boîtier, dont le fond est perforé et qui contient un élément filtrant 21, tel qu'un filtre papier ou un filtre or dit permanent, destiné à contenir une quantité définie de mouture de café 23, ainsi qu'un dispositif de dosage de la mouture de café versée dans le porte-filtre 20, désigné par le repère général 25.

Dans l'exemple de réalisation illustré à la figure 1, le porte-filtre 20 est monté suspendu, par sa partie postérieure 26, dans une pièce verticale de support 27 de manière à être disposé, en position de travail, sous la goulotte 18, et au-dessus d'un récipient 29 collecteur d'infusion reposant sur un socle 31 du boîtier 10.

Selon l'invention, le dispositif de dosage 25 de la mouture de café à filtrer comporte au moins un organe mécanique déformable 33 couplé au porte-filtre 20, réagissant par déformation à la quantité de mouture de café 23 versée dans le porte-filtre, et propre à entraîner, par suite de sa déformation, un organe 35 (figure 3) d'indication visuelle de la quantité de mouture de café désirée, l'organe déformable 33 étant en position stable lorsque la quantité de mouture de café désirée est obtenue.

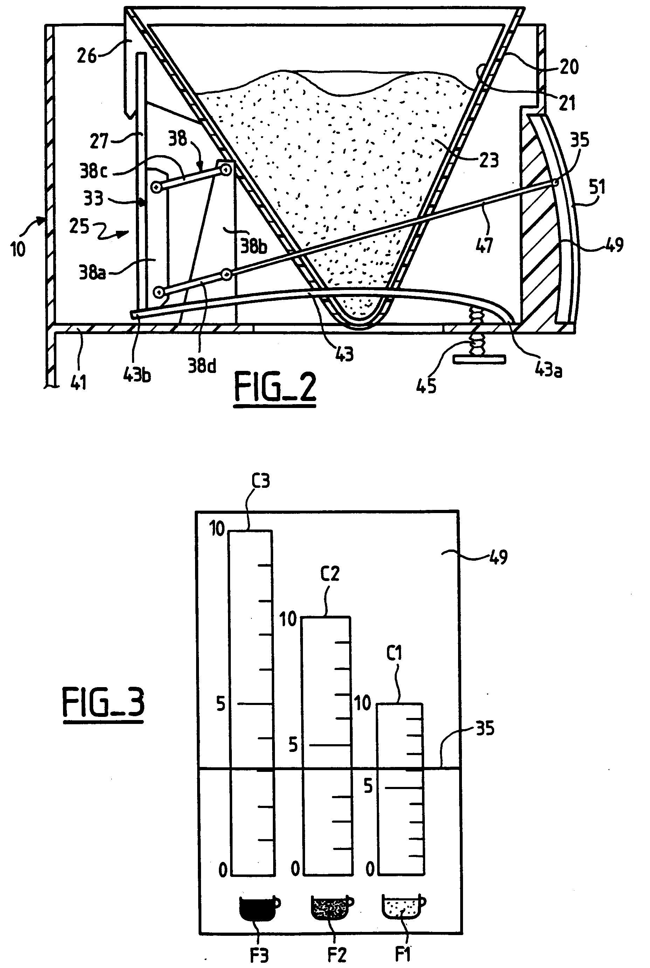

Dans une forme de réalisation préférée, le dispositif de dosage 25 comporte deux organes mécaniques déformables 33 constitués présentement par deux parallélogrammes identiques déformables 38, dont un seul est visible aux figures 1 et 2, agencés parallèlement et à distance l'un de l'autre dans la partie postérieure du porte-filtre 20 en étant couplés chacun à ce dernier par l'intermédiaire de la pièce de support 27.

Comme on le voit bien à la figure 2, dans cet exemple de réalisation, chaque parallélogramme 38 se compose de deux paires de bras articulées l'une à l'autre, à savoir : deux grands bras parallèles 38a, 38b s'étendant verticalement, dont l'un 38a est mécaniquement relié au porte-filtre 20 en étant monté fixe sur la pièce de support 27 et dont l'autre 38b est monté fixe par son extrémité inférieure sur une paroi horizontale 41 du boîtier 10 dans laquelle débouche le fond du porte-filtre 20, et deux petits bras parallèles 38c, 38d s'étendant transversalement aux deux bras verticaux 38a,38b en étant articulés chacun sur ceux-ci par tout moyen d'articulation approprié.

En regard de la figure 2, le bras vertical 38a du parallélogramme déformable 38, solidaire de la pièce de support 27, est associé à un organe élastique constitué présentement par une lame ressort flexible 43 montée dans le boîtier 10 et destinée à maintenir en un équilibre stable le parallélogramme 38 lorsque la quantité de mouture de café désirée est obtenue. Cette lame ressort 43 est fixée à l'une de ses extrémités 43a sur la paroi horizontale 41 du boîtier 10 par tout moyen de fixation approprié (non représenté) et est montée en appui à son autre extrémité 43b en dessous de la partie inférieure de la pièce de support 27. La flexion de la lame ressort 43 est ajustée par des moyens de tarage qui comportent, dans l'exemple de réalisation illustré aux figures 1 et 2, une vis 45 montée traversante dans la paroi 41 du boîtier 10 et dont l'extrémité libre de sa tige vient en appui contre la face inférieure de la lame ressort 43, sensiblement au niveau de l'extrémité 43a de cette dernière, comme on le voit bien à la figure 2. Cette vis de tarage 45 permet avantageusement de s'affranchir des tolérances de fabrication de la cafetière ainsi que de la dérive liée aux déformations du matériau utilisé, et d'adapter le dispositif de dosage à parallélogramme au type d'élément filtrant utilisé 21 (filtre papier, filtre or...).

L'ensemble formé par le porte-filtre 20 solidaire de la pièce de support 27, la lame ressort 43 et le parallélogramme déformable 38 constitue en soi une balance à parallélogramme permettant de doser de façon précise la quantité de mouture de café désirée. En effet, lorsque la mouture de café est versée dans le porte-filtre 20, le poids du porte-filtre augmente, et sous l'effet de ce poids, la pièce de support 27 descend verticalement, provoquant alors la déformation du parallélogramme 38 ; la force transmise à la pièce de support 27 est alors contrebalancée par la force de la lame ressort 43 jusqu'à l'obtention de la quantité de mouture de café désirée pour laquelle le parallélogramme 38 se trouve en un équilibre stable.

Il convient de souligner ici que le parallélogramme déformable 38 réagissant à la quantité de mouture de café versée pourrait être remplacé par tout autre organe déformable mécaniquement et constituant en soi un capteur de poids, du type piézo-électrique par exemple, sans s'écarter pour autant de l'esprit de l'invention.

Dans l'exemple de réalisation illustré aux figures 1 et 2, le bras transversal 38d du parallélogramme déformable 38 se prolonge axialement par une tige de liaison 47 dont l'une des extrémités est montée fixement sur ce bras 38d et dont l'extrémité libre est conformée en un doigt horizontal constituant l'organe 35 d'indication visuelle de la quantité de mouture de café désirée, voir figure 3. Ce doigt est propre à se déplacer dans le sens de la hauteur, par suite de la déformation du parallélogramme 38, pour venir se placer, lorsque la quantité de mouture de café désirée est obtenue, sur une graduation donnée choisie parmi plusieurs graduations qui indiquent chacune un nombre donné de tasses à café, par exemple de 1 à 10 comme illustré à la figure 3, et qui sont inscrites en une colonne sur un cadran 49 ménagé en façade du boîtier 10 et protégé par un cache transparent 51 (figures 1 et 2), de sorte que de l'extérieur, le consommateur peut visualiser le déplacement du doigt 35 indicateur de la quantité de mouture de café versée dans le porte-filtre 20.

De préférence, comme le montre la figure 3, le cadran 49 présente plusieurs colonnes parallèles graduées de mêmes nombres de tasses à café, en l'occurrence trois colonnes graduées de 1 à 10 tasses à café, notées C1, C2 et C3 sur la figure 3, qui correspondent respectivement, dans cet exemple, à trois forces définies de café repérées chacune par un symbole d'identification, respectivement F1 (café "faible"), F2 (café "moyen) et F3 (café "fort"). Le doigt 35 est sécant aux trois colonnes graduées C1, C2 et C3.

On va maintenant expliciter le fonctionnement du dispositif de dosage décrit ci-dessus, en supposant par exemple que le consommateur désire confectionner quatre tasses à café de force "moyenne".

Lorsque le consommateur verse de la mouture de café 23 dans le porte-filtre 20, le poids du porte-filtre augmente et, sous l'effet de ce poids, la pièce de support 27 descend verticalement à l'encontre de la force de la lame ressort 43, provoquant alors la déformation du parallélogramme 38. Par cette déformation du parallélogramme, le bras 38d de celui-ci entraîne vers le haut le doigt horizontal 35 de la tige de liaison 47 liée à ce bras 38d du parallélogramme 38. Le consommateur continue à verser de la mouture de café dans le porte-filtre 20 jusqu'au moment où, par suite de la déformation du parallélogramme 38, le doigt 35 vient se positionner sur la graduation de la colonne C2 du cadran 49 indiquant quatre tasses à café de force "moyenne" F2 et visualisée de l'extérieur par le consommateur, comme illustré à la figure 3. La quantité exacte de mouture de café désirée étant obtenue, la pièce de support 27 n'est donc plus sollicitée, et de fait, le parallélogramme 38 reste en une position stable maintenue par la lame ressort 43.

On notera qu'il est possible de prévoir un dispositif permettant de bloquer le parallélogramme 38 en position de dosage désirée afin d'éviter toute oscillation éventuelle du parallélogramme, et donc du doigt indicateur 35, lors de l'infusion.

On a donc réalisé suivant l'invention une cafetière goutte-à-goutte équipée d'un dispositif de dosage de la mouture de café à filtrer qui est particulièrement avantageux tant du point de vue de sa précision de dosage que du point de vue de sa grande fiabilité.

## Revendications

1. Cafetière goutte-à-goutte comprenant, dans un boîtier (10), un porte-filtre (20) dans lequel est versée de la mouture de café (23), et un dispositif (25) de dosage de la mouture de café versée dans le porte-filtre (20),
**caractérisée en ce que** le porte-filtre (20) étant monté mobile dans le boîtier, le dispositif de dosage (25) comporte au moins un organe mécanique déformable (33) couplé au porte-filtre (20), réagissant par déformation à la quantité de mouture de café (23) versée dans le porte-filtre, et propre à entraîner, par suite de sa déformation, un organe (35) d'indication visuelle de la quantité de mouture de café désirée, ledit organe déformable (33) étant en position stable lorsque la quantité de mouture de café désirée est obtenue.

2. Cafetière goutte-à-goutte selon la revendication 1,
**caractérisée en ce que** l'organe déformable (33) est formé de quatre bras articulés (38a,38b,38c,38d) constituant un parallélogramme déformable (38), l'un (38a) des bras d'une des deux paires du parallélogramme (38) étant mécaniquement relié au porte-filtre (20) et étant associé à un organe élastique (43) monté dans le boîtier de manière à maintenir en un équilibre stable ledit parallélogramme (38) lorsque la quantité de mouture de café désirée est obtenue, et l'un (38d) des bras de l'autre paire du parallélogramme (38) étant lié à l'organe d'indication visuelle (35).

3. Cafetière goutte-à-goutte selon la revendication 2,
**caractérisée en ce que** le bras (38a) de liaison du parallélogramme (38) avec le porte-filtre (20) s'étend verticalement en étant monté fixe sur une pièce verticale (27) de support du porte-filtre, tandis que le bras (38b) du parallélogramme (38) opposé audit bras de liaison (38a) s'étend également verticalement en étant monté fixe dans le boîtier (10), et les deux autres bras (38c,38d) du parallélogramme (38) s'étendent transversalement aux deux bras verticaux (38a,38b) en étant montés chacun articulés sur ces deux bras verticaux du parallélogramme.

4. Cafetière goutte-à-goutte selon les revendications 2 et 3,
**caractérisée en ce que** l'organe élastique est constitué par une lame ressort (43) dont l'une (43a) des extrémités est fixée sur le boîtier (10) et dont l'autre extrémité (43b) est montée en appui en dessous de l'extrémité inférieure de la pièce verticale de support (27).

5. Cafetière goutte-à-goutte selon la revendication 4,
**caractérisée en ce que** la flexion de la lame ressort (43) est ajustée par des moyens de tarage (45) disposés dans le boîtier (10).

6. Cafetière goutte-à-goutte selon l'une des revendications 2 à 5,
**caractérisée en ce que** l'organe d'indication visuelle est constitué par un doigt horizontal (35) qui est formé à l'une des extrémités d'une tige de liaison (47) montée fixement à son autre extrémité dans le prolongement de l'un (38d) des deux bras transversaux du parallélogramme (38), et qui est propre à se déplacer dans le sens de la hauteur, par l'intermédiaire de la tige de liaison (47), par suite de la déformation du parallélogramme (38) pour venir se placer, lorsque la quantité de mouture de café désirée est obtenue, sur une graduation donnée choisie parmi plusieurs graduations qui indiquent chacune un nombre donné de tasses à café et qui sont inscrites en une colonne sur un cadran (49) ménagé en façade du boîtier (10) et protégé par un cache transparent (51).

7. Cafetière goutte-à-goutte selon la revendication 6,
**caractérisée en ce que** le cadran (49) présente plusieurs colonnes parallèles (C1,C2,C3) de mêmes nombres de tasses à café qui correspondent respectivement à différentes forces définies de café et qui sont repérées chacune par un symbole (F1;F2;F3) d'identification de la force définie de café, le doigt (35) étant sécant à l'ensemble desdites colonnes (C1,C2,C3).

## Claims

1. A drip type coffee machine comprising, in a casing (10), a filter carrier (20) into which coffee powder (23) is poured, and a device (25) for dosing the coffee powder poured into the filter carrier (20),
**characterised in that** the filter carrier (20) being movably mounted in the casing, the dosing device (25) comprises at least one mechanically deformable element (33) coupled to the filter carrier (20), reacting by deformation to the amount of coffee powder (23) poured into the filter carrier and designed to entrain, as a result of its deformation, an element (35) for visually indicating the desired amount of coffee powder, said deformable element (33) being in a stable position when the desired amount of coffee powder is obtained.

2. A drip type coffee machine according to claim 1,
**characterised in that** the deformable element (33) is made of four articulated arms (38a, 38b, 38c, 38d) constituting a deformable parallelogram (38), one (38a) of said arms of one of the two pairs of the parallelogram (38) being mechanically connected to the filter carrier (20) and being connected to a resilient element (43) mounted in the casing so as to maintain the parallelogram (38) in a stable equilibrium when the desired amount of coffee powder has been obtained, and one (38d) of the arms of the other pair of the parallelogram (38) being connected to the visual indication element (35).

3. A drip type coffee machine according to claim 2,
**characterised in that** the arm (38a) for connecting the parallelogram (38) to the filter carrier (20) extends vertically and is fixed to a vertical part (27) of the support for the filter carrier, whereas the arm (38b) of the parallelogram (38) opposite said connection arm (38a) also extends vertically and is fixed to the casing (10), and the two other arms (38c, 38d) of the parallelogram (38) extend transversely to the two vertical arms (38a,38b) and are each hinged to the two vertical arms of the parallelogram.

4. A drip type coffee machine according to claims 2 and 3,
**characterised in that** the resilient element consists of a spring blade (43) one (43a) of the ends of which is fixed to the casing (10) and the other end (43b) of which is mounted to bear from below on the lower end of the vertical support part (27).

5. A drip type coffee machine according to claim 4,
**characterised in that** the bending of the spring blade (43) is adjusted by calibrating means (45) located in the casing (10).

6. A drip type coffee machine according to any one of claims 2 to 5,
**characterised in that** the visual indication element consists of a horizontal finger (35), which is formed at one end of a connection rod (47) fixed at its other end as an extension of one (38d) of the two transverse arms of the parallelogram (38), and which is designed to be moved in the height direction, through the intermediary of the connection rod (47), as a result of the deformation of the parallelogram (38), and to become positioned, when the desired amount of coffee powder is obtained, over a specific graduation chosen from a plurality of graduations, each of which indicates a specific number of cups of coffee, which are inscribed in a column on an indicator plate (49) made at the front of the casing (10) and protected by a transparent cover (51).

7. A drip type coffee machine according to claim 6,
**characterised in that** the indicator plate (49) comprises several parallel columns (C1, C2, C3) of a same number of cups of coffee which correspond respectively to different predetermined strengths of coffee, each represented by a symbol (F1; F2; F3) identifying the predetermined strength of coffee, and the finger (35) intersecting all the columns (C1, C2, C3).

## Patentansprüche

1. Tropfkaffeemaschinen, die in einem Gehäuse (10) einen Filterhalter (20), in den das Kaffeepulver (23) geschüttet wird, sowie eine Dosiereinrichtung (25) für das in den Filterhalter (20) geschüttete Kaffeepulver aufweist,
**dadurch gekennzeichnet, daß** der Filterhalter (20) in dem Gehäuse beweglich angebracht ist und die Dosiereinrichtung (25) wenigstens ein verformbares, mit dem Filterhalter (20) gekoppeltes mechanisches Element (33) aufweist, das durch Verformung auf die in den Filterhalter geschüttete Kaffeepulvermenge (23) reagiert und dazu geeignet ist, infolge seiner Verformung ein Element (35) zur visuellen Anzeige der gewünschten Kaffeepulvermenge anzutreiben, wobei das verformbare Element (33) in einer stabilen Position ist, wenn die gewünschte Kaffeepulvermenge erhalten ist.

2. Tropfkaffeemaschine nach Anspruch 1,
**dadurch gekennzeichnet, daß** das verformbare Element (33) aus vier Gelenkarmen (38a, 38b, 38c, 38d) gebildet ist, die ein verformbares Parallelogramm (38) bilden, wobei einer (38a) der Arme eines der beiden Paare des Parallelogramms (38) mit dem Filterhalter (20) mechanisch verbunden ist und einem in dem Gehäuse angebrachten elastischen Element (43) zugeordnet ist, so daß das Parallelogramm (38) in einem stabilen Gleichgewicht gehalten wird, wenn die gewünschte Kaffeepulvermenge erhalten ist, und wobei einer (38d) der Arme des anderen Paares des Parallelogramms (38) mit dem Element (35) zur visuellen Anzeige verbunden ist.

3. Tropfkaffeemaschine nach Anspruch 2,
**dadurch gekennzeichnet, daß** sich der Arm (38) zur Verbindung des Parallelogramms (38) mit dem Filterhalter (20) vertikal erstreckt, wobei er an einem vertikalen Stützteil (27) für den Filterhalter fest angebracht ist, während sich der dem Verbindungsarm (38a) gegenüberliegende Arm (38b) des Parallogramms ebenfalls vertikal erstreckt, wobei er in dem Gehäuse (10) fest angebracht ist, und sich die beiden anderen Arme (38c, 38d) des Parallelogramms (38) quer zu den beiden vertikalen Armen (38a, 38b) erstrecken, wobei sie jeweils an diese beiden vertikalen Arme des Parallelogramms angelenkt angebracht sind.

4. Tropfkaffeemaschine nach den Ansprüchen 2 und 3,
**dadurch gekennzeichnet, daß** das elastische Element durch ein Federblatt (43) gebildet ist, von dem ein Ende (43a) an dem Gehäuse (10) befestigt ist und das andere Ende (43b) unter dem unteren Ende des vertikalen Stützteils (27) in Anlage angebracht ist.

5. Tropfkaffeemaschine nach Anspruch 4,
**dadurch gekennzeichnet, daß** die Biegung des Federblatts (43) wird durch Reguliermittel (45) eingestellt, die in dem Gehäuse (10) angeordnet sind.

6. Kaffeemaschine nach einem der Ansprüche 2 bis 5,
**dadurch gekennzeichnet, daß** das Element zur visuellen Anzeige durch einen horizontalen Finger (35) gebildet ist, der an einem der Enden einer Verbindungsstange (47) geformt ist, die an ihrem anderen Ende in der Verlängerung eines (38d) der beiden Querarme des Parallelogramms (38) fest angebracht ist, und der sich infolge der Verformung des Parallelogramms (38) in Höhenrichtung mittels der Verbindungsstange (47) verschieben kann, um bei Erhalt der gewünschten Kaffeepulvermenge an einer gegebenen Gradeinteilung zu landen, die unter mehreren Gradeinteilungen gewählt ist, die jeweils eine gegebene Anzahl von Kaffeetassen angeben und in einer Spalte an einer Skala (49) eingetragen sind, die an der Vorderseite des Gehäuses (10) vorgesehen und von einer transparenten Abdeckung (51) geschützt ist.

7. Tropfkaffeemaschine nach Anspruch 6,
**dadurch gekennzeichnet, daß** die Skala (49) mehrere parallele Spalten (C1, C2, C3) mit gleichen Zahlen von Kaffetassen aufweist, die jeweils verschiedenen definierten Kaffeestärken entsprechen und jeweils durch ein Symbol (F1; F2; F3) zur Identifizierung der definierten Kaffeestärke markiert sind, wobei der Finger (35) die Gesamtheit der Spalten (C1, C2, C3) schneidet.
